Europäisches Patentamt

(19) European Patent Office

Office européen des brevets

(11) Publication number : **0 468 731 A1**

## (12) EUROPEAN PATENT APPLICATION

(21) Application number : **91306669.2**

(51) Int. Cl.⁵ : **A21D 8/04**

(22) Date of filing : **22.07.91**

(30) Priority : **26.07.90 JP 196360/90**
**30.11.90 JP 329417/90**

(43) Date of publication of application :
**29.01.92 Bulletin 92/05**

(84) Designated Contracting States :
**BE DE ES FR GB IT NL**

(71) Applicant : **ORIENTAL YEAST CO., LTD.**
**6-10, Azusawa 3-chome Itabashi-ku**
**Tokyo (JP)**

(72) Inventor : **Sato, Nobuyoshi**
**C-203, 2-769-1, Mihashi**
**Omiya-shi, Saitama-ken (JP)**
Inventor : **Sato, Mikiko**
**2-30-8, Nishiogi-Minami**
**Suginami-ku, Tokyo (JP)**
Inventor : **Nagashima, Akihiro**
**2-9-16, Mizukino, Moriya-cho**
**Kitasoma-gun, Ibaraki-ken (JP)**

(74) Representative : **Ede, Eric et al**
**Fitzpatricks 4 West Regent Street**
**Glasgow G2 1RS (GB)**

(54) **Bread improver and method of producing bread.**

(57)    There is disclosed a bread improver which comprises glucose oxidase in combination with one or more hydrolases and, optionally, one or more oxidases. The improver may additionally comprise L-ascorbic acid. There is also disclosed a process for manufacturing bread which utilizes the same.

EP 0 468 731 A1

Filed of the Invention

The present invention relates to a bread improver and, in particular, to a novel and safe bread improver not using potassium bromate.

The invention also relates to a novel method of manufacturing bread using the said novel bread improver.

Prior Art

Yeast food has been invented in the U.S.A. in order to assist the fermentation of bread, and the classical Arkady-type formulation, consisting of $CaSO_4$ (24.93%), NaCl (24.93%), $NH_4Cl$ (9.38%), starch (40.49%) and $KBrO_3$ (0.27%), has also been developed in the country. Since then, various additives, including dough conditioners, have been developed to improve the volume, texture, etc. of bread.

Among such additives are included oxidizing agents usable as a bread improver, such as potassium bromate, potassium iodate and ammonium persulfate. Of these known bread improvers, potassium bromate has been used most widely.

In recent years, L-ascorbic acid has been used for health reasons, in place of potassium bromate. However, no satisfactory bread improvers have been known so far.

No hitherto known bread improvers can be effective in both shorter and longer fermentation time processes. In particular, known bread improvers for shorter fermentation time method are less effective and have a tendency to bring about a product of hard and crumbling texture. This tendency becomes marked with the lapse of time after their baking. Such bread also inevitably suffer from insufficiency of fermentation flavor.

Problems to be Solved by the Invention

In Japan, the use of potassium bromate has been restricted by the government for the safety of food. Governments of other countries have also banned or have been considering to ban the use of the additive. It has therefore been strongly desired to develop a safe and effective bread improver usable in place of potassium bromate.

Also from the technical point of view, there has been a strong desire in this field of technology for an all-around bread improver which is not only highly effective in both shorter and longer fermentation time methods, but enables to manufacture bread having excellent flavor, texture, appearance and so on.

Means Taken to Solve the Problems

It is therefore an object of the invention to provide a bread improver which can be free from the above disadvantages.

It is another object of the invention to provide a novel composition which can be used as an all-around bread improver for the manufacture of bread.

In order to achieve the above objects, the present inventors have conducted extensive investigations on a wide range of enzymes and, as a result, have completed the present invention.

The present invention is concerned with a bread improver comprising glucose oxidase (which may hereinafter be referred to as "GOD") in combination with oxidases other than glucose oxidase and hydrolases, and optionally with L-ascorbic acid, together with said combination of enzymes. The invention is also concerned with baking methods using the same.

GOD is an enzyme that specifically oxidize glucose to gluconic acid. The enzyme accelerates the oxidation of L-ascorbic acid and promotes the oxidative bonding of gluten to form tertiary structure in the dough.

As examples of oxidases other than GOD which can be used with advantage in the invention, mention may be made of catalase, lipoxidase, and the like. These oxidases can be used either individually or in combination of two or more. Catalase primarily decomposes hydrogen peroxide ($H_2O_2$) generated by GOD and hence promotes or complements the oxidative action of GOD. Lipoxidase is an enzyme that oxidizes unsaturated fatty acids, such as linoleic acid and linolenic acid. Carotene is also oxidized by this enzyme. The enzyme therefore supplements or promotes the oxidative action of GOD by accelerating the oxidation of the dough through oxidation of such unsaturated fatty acids, and consequently helps whitening and softening bread through oxidative bleaching of carotene contained in flour. However, in cases where these oxidases are used in large quantities, there tend to be resulted in undesirable tightening of the dough and also insufficient oven-spring and rough crumb grain of bread.

In the present invention, hydrolase can be used with advantage in order to complement or further improve the effects of GOD. Examples of preferable hydrolases include lipase, amylase, and the like. Hydrolases can be used either individually or in combination of two or more. Lipase is an enzyme that hydrolyses triglycerides to glycerol and fatty acids. In the dough, lipids are hydrolysed by lipase, thereby forming surfactant which is capable of rectifying the drawbacks resulting from the use of GOD. That is, it suppresses the undesirable excessive toughening of the dough, improves the extensibility of the dough, gives a bigger and softer product and improves its flavor and keeping quality of bread. Amylase is an enzyme that hydrolyses starch to many kinds of sugars, such as dextrin, maltose, glucose, and the like. Such hydrolysates provide extensibility to the dough, improve the oven-spring and keeping quality of bread because of their water-holding property. In the baking industry, $\alpha$-amylase has been used most widely.

In can be particularly advantageous to use GOD in combination with two or more of the above-described enzymes. As examples of particularly effective combination, mention may be made of the followings: A combination of GOD with lipase and/or amylase; a combination of GOD with lipase and/or amylase and with catalase and/or lipoxidase. Where necessary, these combinations can be additionally incorporated with L-ascorbic acid, and dried starch powder as a dispersant.

The amount of the above enzymes to be used varies depending on various factors, such as the enzyme's activity, kinds of bread, baking methods, e.g., fermentation time, and kinds of raw materials used. For example, in the case of a no-time dough method, enzymes can be used in quantities shown hereinbelow:

GOD (1,500 Units/g) is used preferably in an amount of ca. 1 to 200 ppm, more preferably ca. 10 to 100 ppm. When it is used less than the above lower limit, there will be resulted in an undesirably low oxidizing effect, whereas when it is used in an excessive amount, there will be resulted in an excessive tightening of the dough and a poor handling of the dough because of too much oxidation.

Catalase (50,000 Units/g) is used preferably in an amount of ca. 1 to 200 ppm, more preferably ca. 5 to 80 ppm. When it is used less than the above lower limit, there will be resulted in an undesirably low oxidizing effect, whereas when it is used in an excessive amount, there will be resulted in an excessive tightening of the dough and a poor handling of the dough.

Lipoxidase (lipoxidase-containing soybean powder, 500,000 Oriental Units/g) can be used preferably in an amount of ca. 200 to 20,000 ppm, more preferably ca. 500 to 2,000 ppm. When it is used less than the above lower limit, there will be resulted in an undesirably low oxidizing effect, whereas when it is used in an excessive amount, there will be resulted an undesirable deterioration in taste.

Lipase (60,000 Units/g)can be used preferably in an amount of ca. 50 to 1,000 ppm, more preferably from 100 to 600 ppm. When it is used less than the above lower limit, there will be resulted a low extensibility of dough and the desired softening of bread will be attained only insufficiently, whereas when it is used in an excessive amount, there will be resulted in an undesirably sticky and slack dough which could hardly be handled.

Amylase (10,000 Oriental Units/g) is used preferably in an amount of ca. 100 to 1,000 ppm, more preferably ca. 200 to 800 ppm. When it is used less than the above lower limit, there will be resulted a low extensibility of dough and the desired softening of bread will be attained only insufficiently, whereas when it is used in an excessive amount, there will be resulted in an undesirably sticky dough which could hardly be handled.

L-ascorbic acid enhances the oxidative effect with GOD and further strengthens the binding of the dough. The additive when used together with the above enzymes, further improves the baking properties. L-ascorbic acid is used preferably in an amount of ca. 5 to 500 ppm, more preferably ca. 20 to 200 ppm.

It should be noted that the above amounts are given just for illustration and the enzymes can be used in quantities not falling within the above ranges.

The units of enzyme activities employed herein are as follows:

GOD activity: One unit is defined as the activity of enzyme which catalyses the oxidation of one micromole of glucose per minute at 37°C and pH 5.1.

Catalase activity: One unit is defined as the activity of enzyme which decomposes one micromole of hydrogen peroxide per minute at 25°C and pH 7.5.

Lipoxidase activity: One unit is defined as the activity of enzyme which shows 0.001 of O.D. (at 234 nm) change per minute in substrate solution containing linoleic acid at 25°C and pH 9.0.

Lipase activity: 10 units is defined as the activity of enzyme which liberates one micromole of fatty acids per minute when an olive oil emulsion is used as a substrate at 37°C and pH 6.0.

Amylase activity: According to the Oriental method, wherein the viscosity decreasing time of a starch solution is measured by Ostwald Viscometer at 30°C and pH 5.0. (The amylase sample used in the present exhibited an activity of 10,000 Oriental units per gram).

These enzymes can be prepared, e.g., by cultivating microorganisms or by extracting from plant or animal bodies. They can be used in either a purified or crude state. It is also possible to use cultured products (e.g., cell bodies of microorganisms, culture broths, culture filtrates, extracts, etc.) or extracts derived from animals or plants, instead of enzymes. If desired, products obtained by concentrating, drying or diluting such cultured or extracted products can be used.

Further, any material that contains such enzymes can also be used, if desired, as it is. For example, soybean powder and various beans or bean products can be used in place of lipoxidase; and rice bran or its products can be used in place of lipase.

The bread improver of the present invention can be used for the manufacturing of bread in the same manner as in cases where commercial bread improvers are used. For example, it can be added into a mixer with other ingredients at the beginning of mixing process.

The bread improver can be utilized in any known baking methods, including no-time dough method, straight dough method, sponge and dough method, overnight dough method, low-temperature and long-time fermentation method, and frozen dough method. For example, in sponge and dough method, the improver can be added in two portions: one portion at sponge mixing, and the other portion at dough mixing. It is also possible to add to either sponge or dough. It can however be most preferable to add all the improver at sponge mixing.

The bread improver according to the invention can be an all-around improver. It can be used in both long time and short time baking method, and it can be highly suited for home uses, as well as for industrial uses.

According to the present invention, there can be obtained bread of a sufficient volume, which is satisfactory in the quality of the internal and external characteristics. Furthermore, the undesirable stickiness of the dough can be suppressed by the addition of the improver and the resulting dough can be handled quite smoothly. The effects of the improver is therefore marked and immediate from operation point of view.

The present invention will further be illustrated by examples. It should however be noted that the invention is by no means limited to these.

Example 1

Bread improvers according to the invention were prepared by thoroughly admixing the ingredients set forth in Table 1.

Table 1

| Bread Improver | No. 1 | No. 2 | No. 3 | No. 4 | No. 5 |
|---|---|---|---|---|---|
| Glucose oxidase | 16.7% (60ppm) | 16.7% (60ppm) | 13.0% (30ppm) | 16.7% (60ppm) | 23.1% (120ppm) |
| Lipase | 83.3% (300ppm) | - | 43.5% (100ppm) | 55.5% (200ppm) | 57.7% (300ppm) |
| Amylase | - | 83.3% (300ppm) | 43.5% (100ppm) | 27.8% (100ppm) | 19.2% (100ppm) |
| Total | 100% | 100% | 100% | 100% | 100% |

Note : Figures in parentheses show theoretical concentrations of the ingredients (based on the weight of wheat flour).

Example 2

Bread improvers according to the invention were prepared by thoroughly admixing the ingredients set forth in Table 2.

Table 2

| Bread Improver | No. 1 | No. 2 | No. 3 | No. 4 | No. 5 |
|---|---|---|---|---|---|
| Glucose oxidase | 3.0% (60ppm) | 3.0% (60ppm) | 1.5% (30ppm) | 3.0% (60ppm) | 6.0% (120ppm) |
| Lipase | 15.0% (300ppm) | – | 5.0% (100ppm) | 10.0% (200ppm) | 15.0% (300ppm) |
| Amylase | – | 15.0% (300ppm) | 5.0% (100ppm) | 5.0% (100ppm) | 5.0% (100ppm) |
| Dried starch (dispersant) | 82.0% | 82.0% | 88.5% | 82.0% | 74.0% |
| Total | 100% | 100% | 100% | 100% | 100% |

Note : Figures in parentheses show theoretical concentrations of the ingredients ( flour basis) in the case where the bread improver is used at a rate of 0.2% on flour weight.

Example 3

Bread improvers according to the invention were prepared by admixing the ingredients set forth in Table 3 (total weight of ingredients: 10 kg/lot) for a period of 7 minutes by use of a V-type mixer manufactured by Hosokawa Micron Co.

Table 3

| Bread Improver | No. 1 | No. 2 | No. 3 | No. 4 | No. 5 |
|---|---|---|---|---|---|
| L-ascorbic Acid | 2.5% (50ppm) | 2.5% (50ppm) | 5.0% (100ppm) | 5.0% (100ppm) | 5.0% (100ppm) |
| Glucose oxidase | 3.0% (60ppm) | 1.5% (30ppm) | 1.5% (30ppm) | 3.0% (60ppm) | 6.0% (60ppm) |
| Catalase | 3.0% (60ppm) | 1.5% (30ppm) | 1.5% (30ppm) | 3.0% (60ppm) | 3.0% (60ppm) |
| Soybean powder | − | 50.0% (1000ppm) | − | 50.0% (1000ppm) | 50.0% (1000ppm) |
| Lipase | − | − | 15.0% (300ppm) | 30.0% (600ppm) | 15.0% (300ppm) |
| Amylase | 30.0% (600ppm) | 15.0% (300ppm) | − | − | 15.0% (300ppm) |
| Dried starch (dispersant) | 61.5% | 29.5% | 77.0% | 9.0% | 9.0% |
| Total | 100% | 100% | 100% | 100% | 100% |

Note: Figures in parentheses show theoretical concentrations of the ingredients (flour basis) in the case where the bread improver is used at a rate of 0.2% on flour weight.

## Example 4

Each bread of Sample Nos. 0 to 15 in Table 5 was prepared in accordance with the formula and the processing set forth hereinbelow, whereby bread improver Nos. 1 to 5 prepared in Example 2 were used for Sample Nos. 1 to 5 by 0.2% dosage, respectively, and bread improver Nos. 6 to 15 were used for Sample Nos. 6 to 15 (controls), respectively. No bread improver (No. 0 in Table 4) was used for Sample No. 0 (control).

In Table 4 are shown the compositions of bread improver Nos. 6 to 15 (controls).

The results obtained are shown in Table 5.

Formula

| | |
|---|---|
| Bread flour | 100 % |
| Sugar | 5 % |
| Salt | 2 % |
| Shortening | 4 % |
| Yeast | 3 % |
| Bread Improver | (*) |

Note     *:Bread improvers containing GOD, lipase, amylase, etc. as shown in Table 2 or 4 were used at ratio shown therein.

Procedure                                Fat

Mixing                         $L_1M_3 \downarrow M_3H_{8+2}$

Dough temperature              30 °C

Floor time                     15 min

Dividing                       450 g

Intermediate proofing          15 min

Final proofing (35°C, 90% R.H.) Up to 1.5 cm above the pan

Baking                         200 °C, 20 min

Table 4

| No. | GOD(ppm) | | | | Lipase(%) | | | Amylase(%) | | |
|---|---|---|---|---|---|---|---|---|---|---|
| | 10 | 30 | 60 | 120 | 0.01 | 0.03 | 0.05 | 0.01 | 0.03 | 0.05 |
| 0 | | | | | | | | | | |
| 6 | ○ | | | | | | | | | |
| 7 | | ○ | | | | | | | | |
| 8 | | | ○ | | | | | | | |
| 9 | | | | ○ | | | | | | |
| 10 | | | | | ○ | | | | | |
| 11 | | | | | | ○ | | | | |
| 12 | | | | | | | ○ | | | |
| 13 | | | | | | | | ○ | | |
| 14 | | | | | | | | | ○ | |
| 15 | | | | | | | | | | ○ |

Table 5

| No. | Handling of Dough | Final Proofing (min) | Rating of Bread | | | | | | | Overall Rating |
|---|---|---|---|---|---|---|---|---|---|---|
| | | | Height (cm) | Volume (ml) | Appearance (10) | Crumb Grain (10) | Flavor | Texture | | |
| 0 | ✕ Weak | 49 | 11.8 | 2130 | 6 | 6 | ✕ Powdery Odor | ✕ Hard | | ✕ |
| 1 | ○ | 48 | 12.6 | 2380 | 7.5 | 7.5 | ○ | ◎ | | ○ |
| 2 | ○ | 47 | 12.4 | 2340 | $7^+$ | $7^+$ | △ | ○ | | ○ |
| 3 | ○ | 47 | 12.2 | 2360 | 7.5 | $7^+$ | ○ | ○ | | ○ |
| 4 | ◎ | 47 | 13.0 | 2450 | $8^-$ | $7.5^+$ | ◎ | ◎ | | ◎ |
| 5 | ○ | 48 | 13.1 | 2480 | $8^-$ | 7.5 | ◎ | ◎ | | ◎ |
| 6 | △ | 48 | 11.9 | 2120 | $6^+$ | 6.5 | ✕ | △ | | △ |
| 7 | △ | 47 | 11.9 | 2150 | 6.5 | $6.5^+$ | ✕ | △ | | △ |
| 8 | ○ | 45 | 12.0 | 2220 | $6.5^+$ | $7^-$ | ✕ | △ | | △ |
| 9 | △ Tight | 47 | 12.6 | 2310 | 7 | $7^-$ | ✕ | △ | | △ |
| 10 | △ | 46 | 12.1 | 2220 | $6.5^-$ | $7^-$ | ○ | ○ Soft | | △ |
| 11 | △ | 48 | 11.9 | 2250 | 6.5 | $6.5^+$ | ◎ | ○ Soft | | △ |
| 12 | ✕ Loose | 49 | 11.8 | 2260 | 6.5 | $6^+$ | ◎ | △ Sticky | | △ |
| 13 | △ | 48 | 12.0 | 2200 | $6.5^-$ | 6.5 | △ | △ | | △ |
| 14 | ○ | 46 | 12.2 | 2260 | 6.5 | $6.5^+$ | △ | △ | | △ |
| 15 | △ | 46 | 12.2 | 2280 | $6.5^+$ | $7^-$ | ○ | △ | | △ |

EP 0 468 731 A1

It would be apparent from the results shown in Table 5 that bread improvers containing two enzymes (in particular, GOD and lipase) can be highly effective and that further improved results can be attained by using bread improvers containing the three enzymes (i.e., GOD, lipase and amylase). It would also be apparent that satisfactory results can be obtained by using bread improvers without chemical additives.

Example 5

Each bread of Sample Nos. 1 to 5 in Table 6 was prepared by using bread improver Nos. 1 to 5 prepared in Example 3, by dosage of 0.2%, respectively. The results obtained are shown in Table 6.

The formula and procedure employed in the above preparation were as follows:

<u>Formula</u>

| | |
|---|---|
| Bread flour | 100 % |
| Sugar | 5 % |
| Salt | 2 % |
| Shortening | 4 % |
| Yeast | 3 % |
| Bread improver | ( * ) |

Note   * : Bread improvers prepared in Example 3.

<u>Procedure</u>

| | Fat |
|---|---|
| Mixing | $L_1 M_3 \downarrow M_3 H_8$ |
| Dough temperature | 30 °C |
| Floor time | 10 min |
| | 450 g |
| Intermediate proofing | 15 min |
| Final proofing (35°C, 90% R.H.) | Up to 1.5 cm above the pan |
| Baking | 200 °C, 20 min |

For the purpose of comparison, bread Nos. 6 to 8 in Table 6 were prepared in the same manner as the above, using the following bread improver Nos. 6 to 8, respectively, except that the bread improvers having the formulae set forth below, respectively, were used by dosage of 0.1%. In the following formulae, the figures in the parentheses show the concentrations of the ingredients by flour basis.

No. 6:   L-ascorbic acid 10% (100 ppm)
         Dried wheat flour 90%
No. 7:   L-ascorbic acid 10% (100 ppm)
         GOD 3% (30 ppm)
         Dried wheat flour 87%
No. 8:   Commercial bread improver for no time dough method
         (based on L-ascorbic acid)

Table 6

| Run No. | | Handling of Dough | Rating of Bread | | | | | | | | | Overall Rating |
|---|---|---|---|---|---|---|---|---|---|---|---|---|
| | | | Final Proofing (min) | Height (cm) | Volume (ml) | Appear-ance (10) | Crumb Grain (10) | Flavor | Texture | Hardness of Bread* (g/cm²) | | |
| | | | | | | | | | | 1 Day after Baking | 3 days after Baking | |
| Sample | 1 | ◎ | 51 | 12.6 | 2430 | 7.5⁻ | 7.5⁻ | ○ | ○ | 29.8 | 47.4 | ◎ |
| | 2 | ◎ | 49 | 12.8 | 2420 | 7.5⁺ | 7.5⁺ | ○ | ◎ | 23.5 | 44.6 | ◎ |
| | 3 | ○ | 48 | 12.9 | 2400 | 7.5 | 7.5⁻ | ◎ | ◎ | 22.3 | 42.5 | ◎ |
| | 4 | ○ | 47 | 13.0 | 2450 | 7.5⁺ | 8⁺ | ◎ | ◎ | 18.7 | 41.4 | ◎ |
| | 5 | ◎ | 47 | 13.5 | 2480 | 8⁺ | 8⁺ | ◎ | ◎ | 20.6 | 40.3 | ◎ |
| Control | 6 | X | 48 | 12.2 | 2300 | 7⁻ | 7⁻ | X | X | 33.0 | 63.9 | X |
| | 7 | X | 48 | 12.6 | 2360 | 7.5⁺ | 7.5 | △ | △ | 32.4 | 56.0 | △ |
| | 8 | ◎ | 48 | 12.3 | 2380 | 7⁺ | 7 | △ | △ | 31.2 | 53.3 | ○ |

Note

Rating: ◎ ... Excellent, ○ ... Good, △ ... Fair, X ... Poor

Hardness of Bread: Bread was stored at 20°C and its hardness was determined by Rheometer manufactured by Fudo Co., whereby the 2 cm-sliced bread was pressed down to 1 cm by circular plunger.

It would be apparent from the results shown in Table 6 that excellent results can be attained by using bread improvers containing GOD in combination with one or more oxidases and one or more hydrolases, and that such bread improvers can be more effective than the currently commercial bread improvers based on L-ascorbic acid.

Merits of the Invention

The bread improver according to the invention is based on novel compositions consisting of natural enzymes and, where optionally used, L-ascorbic acid. It can therefore be highly advantageous in safety.

In addition, the bread improver is applicable to any bread manufacturing processes and can be an all-around type additive highly effective not only in shorter fermentation time method but in longer fermentation time method.

The bread improver brings about a dough having excellent extensibility and makes it possible to manufacture bread which has not only bigger loaf volume but excellent other qualities, e.g., flavor, texture, keeping quality, etc.

## Claims

1. A bread improver which comprises glucose oxidase in combination with lipase and/or amylase.

2. A bread improver which comprises glucose oxidase in combination with catalase and/or lipoxidase, and with lipase and/or amylase.

3. A bread improver according to claim 1 or 2, which additionally comprises L-ascorbic acid and/or dried starch powder.

4. A process for manufacturing bread, which utilizes a bread improver according to any of the claims 1 to 3.

EP 0 468 731 A1

**European Patent Office**

# EUROPEAN SEARCH REPORT

Application Number

EP 91 30 6669

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CHEMICAL ABSTRACTS, vol. 71, no. 9, 27 October 1969, Columbus, Ohio, US; abstract no. 79951H, KRETOVICH, V.L. ET AL.: 'Dough preparation.' page 252 ; column 1 ; | 1,3-4 | A21D8/04 |
| Y | * abstract * & Otkrytiya, Izobret., Prom. Obraztsy, Tovarnye Znaki, 1969, 46(15), 4-5 | 2 | |
| Y | CHEMICAL ABSTRACTS, vol. 71, no. 21, 24 November 1969, Columbus, Ohio, US; abstract no. 100605K, POLYAK, M.V. & LINETSKAYA, G.N.: 'Glucose oxidase as a conditioner in bread baking.' page 225 ; column 2 ; * abstract * & Fermenty Med., Pishch. Prom. Sel. Khoz. 1968,155-7 | 2 | |
| A | CHEMICAL ABSTRACTS, vol. 92, no. 9, 1980, Columbus, Ohio, US; abstract no. 74572J, FRAZIER, P.J. ET AL.: 'Better bread from softer wheat - rheological considerations.' page 517 ; column 1 ; * abstract * & Getreide, Mehl Brot 1979, 33(10), 268-71 | 1-4 | **TECHNICAL FIELDS SEARCHED (Int. Cl.5 )** <br><br> A21D |
| A | CHEMICAL ABSTRACTS, vol. 94, no. 6, March 1981, Columbus, Ohio, US; abstract no. 82559S, ORIENTAL YEAST CO.,LTD.: 'Enzymic quality improvement of flour.' page 593 ; column 2 ; * abstract * & JP-A-80,153,549 (29-11-1980) | 1-4 | |

The present search report has been drawn up for all claims

| Place of search | Date of completion of the search | Examiner |
|---|---|---|
| THE HAGUE | 04 NOVEMBER 1991 | BEVAN S.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P0401)

13